# FASCICULE DE BREVET EUROPEEN

(11) **EP 3 132 489 B1**
(45) Date de publication et mention de la délivrance du brevet: **10.01.2018**
(21) Numéro de dépôt: 15720389.4
(22) Date de dépôt: 14.04.2015
(51) Int. Cl.: H01M 10/44, H01M 10/0525, H01M 4/505

(54) **PROCÉDÉ DE FORMATION D'UNE CELLULE DE BATTERIE LI-ION COMPRENANT UN MATÉRIAU POUR CATHODE À BASE DE LNMO**
VERFAHREN ZUR HERSTELLUNG EINER LI-IONEN-BATTERIEZELLE MIT EINEM LNMO-KATHODENMATERIAL
METHOD FOR FORMING A LI-ION BATTERY CELL COMPRISING AN LNMO CATHODE MATERIAL

(30) Priorité: 17.04.2014 FR 1453484
(43) Date de publication de la demande: 22.02.2017
(73) Titulaire: Renault S.A.S., 92100 Boulogne-Billancourt (FR)
(72) Inventeur: PHAN, Viet-Phong, 38000 Grenoble (FR); DANIEL, Lise, 38160 Saint Vérand (FR); SI LARBI, Grégory, 38590 Sillans (FR)
(86) Numéro de dépôt international: PCT/FR2015/051003
(87) Numéro de publication internationale: WO 2015/159019

(56) Documents cités:
- EP-A1- 1 052 714
- CN-A- 102 694 178
- JP-A- 2002 216 843
- JP-A- 2002 216 851
- KR-A- 20130 126 365
- US-A1- 2008 138 703
- US-A1- 2010 192 362
- US-A1- 2011 236 751

## Description

L'invention concerne le domaine général des batteries rechargeables lithium-ion (Li-ion).

Plus précisément, l'invention concerne les batteries rechargeables Li-ion comprenant un matériau pour cathode à base d'oxyde spinelle '5V', c'est-à-dire d'oxyde de manganèse lithié substitué au nickel de formule LiNiₓMn₂₋ₓO₄ (LNMO), dans laquelle 0<x≤0,5.

Plus précisément encore, l'invention concerne un procédé de formation d'une cellule de batterie Li-ion comprenant un matériau pour cathode à base de LNMO.

Classiquement, les batteries Li-ion comprennent une ou plusieurs cathodes, une ou plusieurs anodes, un électrolyte et un séparateur composé d'un polymère poreux ou de tout autre matériau approprié afin d'éviter tout contact direct entre les électrodes.

Les batteries Li-ion sont déjà largement utilisées dans de nombreuses applications nomades. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une autodécharge faible par rapport à d'autres accumulateurs et également par une baisse des coûts au kilowatt-heure liée à cette technologie.

Néanmoins, une amélioration de cette technologie est nécessaire pour gagner de nouveaux marchés tels que les véhicules électriques et hybrides qui demandent souvent une forte densité d'énergie, une densité de puissance élevée et une longue durée de vie.

Une voie possible permettant d'accroître la densité d'énergie de la cellule est de remplacer les matériaux pour cathode conventionnels par des matériaux à haut potentiel comme par exemple des oxydes spinelles de composition générique LiNiₓMn₂₋ₓO₄ (LNMO), dans laquelle 0<x≤0,5 et dont le potentiel d'oxydoréduction est de 4,7 V vs Li⁺/Li.

Cependant, ces matériaux présentent des inconvénients liés à une autodécharge relativement élevée et un fort dégazage pendant l'utilisation et le stockage à cause de l'instabilité des électrolytes conventionnels lors du contact avec la surface du matériau à base de LNMO à haut potentiel. En effet, une fois l'électrolyte imprégné dans la cellule, la cellule de batterie Li-ion est activée. Des réactions thermodynamiques sont alors engagées et les premiers échanges d'ions lithium entre les électrodes ont lieu. Des produits issus de ces réactions s'accumulent sur la surface des électrodes pour former une couche appelée « Solid Electrolyte Interphase » (SEI). Cette couche SEI est un élément essentiel au bon fonctionnement de la batterie Li-ion car non seulement elle conduit très bien les ions lithium mais elle présente aussi l'avantage de stopper la décomposition catalytique du solvant. Cependant, une couche SEI instable entraîne entre autres une forte baisse de la capacité.

Afin de résoudre ce problème d'instabilité à haut potentiel, plusieurs approches, visant à protéger l'interface électrolyte/cathode (LNMO), ont été envisagées.

Ainsi, des additifs ont été introduits dans l'électrolyte et réagissent à la surface du matériau pour cathode à base de LNMO afin de créer une barrière protectrice à l'interface électrolyte/cathode (LNMO) comme K. Xu et al. le décrit dans « Electrolyte additive in support of 5V Li ion chemistry » Journal of The electrochemical Society, 158, 3, A337-A342 (2011).

Un enrobage stable a été déposé sur la surface du matériau pour cathode à base de LNMO afin de le protéger de l'électrolyte comme le décrit Kim et al. dans « A perspective on coatings to stabilize high-voltage cathodes: LiMn1.5Ni0.5O4 with sub-nanometer lipon cycled with LiPF6 », Electrolyte Journal of The electrochemical Society, 160 (5) A3113-A3125 (2013).

Des solvants de l'électrolyte de type carbonates ont été remplacés par de nouveaux solvants fluorés ou sulfones qui sont plus stables à haut potentiel comme le décrit Nan Shao & al. dans Electrochemical Windows of Sulfone-Based Electrolytes for High-Voltage Li-Ion Batteries, J. Phys. Chem. B 2011, 115, 12120-12125.

Enfin, des additifs ont été ajoutés dans l'électrode et réagissent afin de protéger la cathode de l'électrolyte comme le décrit le document CN102694178.

Il est à noter que toutes ces approches impliquent une modification de la chimie interne et/ou une modification du design des cellules.

Une autre voie a été explorée qui consiste en un procédé de formation spécifique de cellule de batterie Li-ion comme le décrit le document WO 2010/30894. Dans un premier temps, la cellule est chargée jusqu'à un état de charge inférieur à 50%. Puis, la cellule est stockée pendant une durée prédéterminée. Dans un mode de réalisation particulier, la période de stockage est de deux jours à 45°C suivie d'une période de quelques heures à température ambiante. La cellule est par la suite chargée jusqu'à un état de charge compris entre 90 et 100% puis stockée pendant plusieurs jours à 45°C. Un tel procédé de formation comprenant un stockage de deux jours à 45°C ne permet pas de résoudre le problème de dégazage des systèmes à haute tension à base de LNMO. Le document CN102694178 A concerne un procédé de formation spécifique pour batteries lithium-ion comprenant le matériau actif cathodique LiNi_{0.5}Mn_{1.5}O₄ et visant également à éviter un trop fort dégazage des batteries ayant un tel matériau actif.

Le document JP 2002 216851 A décrit, dans le contexte de matériaux cathodiques actifs différents, un procédé de formation de batteries lithium-ion impliquant un stockage de longue durée d'une batterie chargée suivi d'une évacuation des gazs produits.

La présente invention a pour objet de proposer une solution permettant de résoudre l'ensemble des problèmes mentionnés ci-dessus.

Selon l'invention, un procédé de formation d'une cellule de batterie Li-ion comprenant un matériau pour cathode à base de LNMO, comprenant un matériau actif de formule LiNiₓMn₂₋ₓO₄, dans laquelle 0<x≤0,5, un matériau pour anode, un séparateur et un électrolyte, comprend les étapes successives suivantes :
(a) charge de la cellule jusqu'à un état de charge de 100% ;
(b) stockage de la cellule à un état de charge de 100% en circuit ouvert pendant une durée d'au moins 48 heures ;
(c) évacuation du gaz généré pendant la charge et le stockage.

Le procédé selon l'invention permet de réduire de manière importante les inconvénients liés au dégazage pendant l'utilisation de la cellule de batterie Li-ion et à l'autodécharge lors du stockage. Une fois formée par ledit procédé, la cellule de batterie Li-ion fournit, lors de son utilisation, de bonnes performances électrochimiques, notamment en termes de capacité.

Avantageusement, le stockage de la cellule se déroule à température ambiante.

Selon un mode de réalisation particulier, le procédé selon l'invention comprend en outre une étape de décharge de la cellule jusqu'à un état de charge compris entre 10 et 0% suivie d'une étape de stockage de la cellule à un état de charge compris entre 10 et 0% en circuit ouvert à température ambiante.

Selon une autre caractéristique de l'invention, les étapes successives du procédé selon l'invention sont répétées au moins une seconde fois.

Selon un mode de réalisation particulier, la durée de stockage est au moins égale à une semaine, préférentiellement au moins égale à deux semaines, plus préférentiellement au moins égale à quatre semaines.

De manière préférée, on mesure le volume de gaz généré pendant le stockage.

Dans un autre mode de réalisation, les étapes successives du procédé selon l'invention sont répétées jusqu'à ce que le volume de gaz généré soit inférieur à un seuil.

Avantageusement, lorsque le volume de gaz généré est inférieur à un seuil, une étape d'évacuation de gaz est réalisée suivie d'une étape de charge de la cellule jusqu'à un état de charge de 100% avant utilisation. Une étape facultative de décharge jusqu'à un état de charge compris entre 20 et 50% peut être ensuite appliquée pour le stockage ou transport des batteries.

De manière préférée, une étape préliminaire d'activation de la cellule par injection d'un électrolyte est réalisée suivie d'une étape d'imprégnation dudit électrolyte en circuit ouvert pendant 48 heures à température ambiante.

Selon une variante du procédé selon l'invention, l'étape de stockage est réalisée à une température comprise entre 15 et 45°C pendant une durée inférieure ou égale à deux semaines.

Selon le procédé de l'invention, le matériau pour cathode à base de LNMO comprend un matériau actif de formule LiNiₓMn₂₋ₓO₄, dans laquelle 0<x≤0,5.

D'autres buts, caractéristiques et avantages de la présente invention apparaîtront encore plus clairement à la lecture de la description suivante, donnée uniquement à titre d'exemple non limitatif, et faite en référence aux dessins annexés sur lesquels :
- la figure 1 est un diagramme illustrant les différentes étapes du procédé de formation selon l'invention dans un mode de réalisation préféré.
- la figure 2 est un graphe montrant l'évolution du volume de gaz généré au cours de périodes de 4 semaines de stockage à un état de charge de 100% et répétées 3 fois.
- la figure 3 est un histogramme représentant l'évolution de l'autodécharge après des périodes de 4 semaines de stockage à un état de charge de 100%.

Dans la description de l'invention, le terme « à base de » est synonyme de « comprenant majoritairement ».

Il est par ailleurs précisé que les expressions « compris entre... et... » et « de... à... » utilisées dans la présente description doivent s'entendre comme incluant chacune des bornes mentionnées.

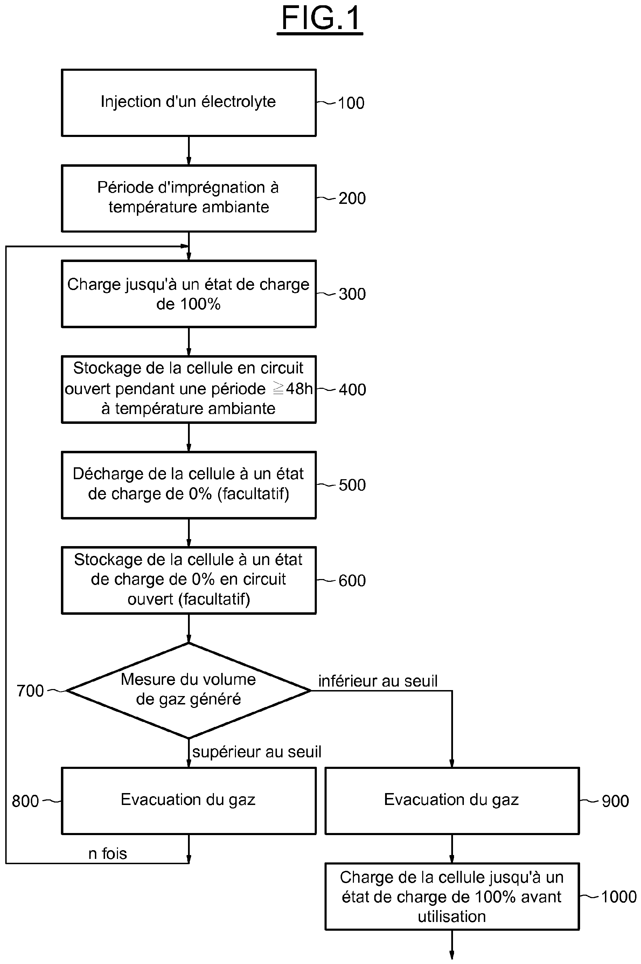

La figure 1 illustre un mode de réalisation particulier du procédé de formation selon l'invention.

Comme le montre la figure 1, la cellule est tout d'abord activée par injection (100) d'un électrolyte. Une période d'imprégnation (200) en circuit ouvert à température ambiante au sein de la cellule s'en suit pendant par exemple 48 heures. Après avoir été chargée (300) jusqu'à un état de charge de 100%, la cellule est ensuite stockée (400) en circuit ouvert pendant une période d'au moins 48 heures, par exemple pendant 4 semaines, à température ambiante. Pendant son stockage, elle génère du gaz et s'autodécharge du fait de réactions parasites liées à l'instabilité de l'électrolyte au contact de l'électrode. Avec l'accumulation de gaz dans la cellule, le contact entre les deux électrodes est détérioré. De manière facultative, une décharge (500) complète de la cellule peut être alors réalisée suivie d'un stockage (600) en circuit ouvert à température ambiante pendant par exemple 48 heures. Le volume de gaz généré pendant le stockage (400) est ensuite mesuré (700). Si le volume est supérieur à un seuil, par exemple supérieur à 0,5 mL/g de matériau à base de LNMO, il est procédé à une évacuation (800) du gaz afin d'assurer un contact homogène entre les deux électrodes. La cellule est alors chargée (300) une nouvelle fois jusqu'à un état de charge de 100% avant d'être stockée (400) à nouveau en circuit ouvert à température ambiante pendant par exemple 4 semaines.

Le procédé peut être ainsi répété tant que le volume de gaz généré est supérieur au seuil.

En revanche, si, lors de l'étape de mesure (700), le volume de gaz généré est inférieur au seuil, il est procédé à une évacuation (900) finale de gaz suivie d'une charge (1000) de la cellule jusqu'à un état de charge de 100%. La cellule est alors formée et prête à l'emploi. Si elle doit être stockée ou transportée, une décharge peut ensuite être appliquée jusqu'à un état de charge compris entre 20 et 50%.

En fait, le procédé consiste ici en un stockage de la cellule en circuit ouvert à l'état chargé jusqu'au ralentissement du processus de génération du gaz à des vitesses acceptables pour l'application visée. Cette vitesse du processus de génération du gaz dépend essentiellement de l'emballage d'une cellule. Ainsi, si le volume de gaz généré est inférieur au seuil, la vitesse de ce processus est jugée suffisamment faible pour permettre l'utilisation d'une cellule en cyclage.

Le procédé selon l'invention d'une cellule de batterie Li-ion comprenant un matériau pour cathode à base de LNMO, un matériau pour anode, un séparateur et un électrolyte, est tel que ledit matériau pour cathode à base de LNMO comprend un matériau actif de formule LiNiₓMn₂₋ₓO₄, dans laquelle 0<x≤0,5.

Outre le matériau actif, le matériau pour cathode à base de LNMO peut également comprendre des fibres de carbone. Par exemple, ce sont des fibres de carbone à croissance en phase vapeur (VGCF pour « Vapor Grown Carbon Fibers ») commercialisées par la société Showa Denko. D'autres types de fibres de carbone appropriés peuvent être des nanotubes de carbone, des nanotubes dopés (éventuellement au graphite), des nanofibres de carbone, des nanofibres dopées (éventuellement au graphite), des nanotubes de carbone monofeuillets ou des nanotubes de carbone multifeuillets. Les méthodes de synthèse relatives à ces matériaux peuvent inclure une décharge par arc, une ablation laser, une torche à plasma et une décomposition chimique en phase vapeur.

Le matériau pour cathode à base de LNMO peut en outre comprendre un ou plusieurs liant(s).

Par exemple, le ou les liant(s) peuvent être choisis parmi les latex de polybutadiène-styrène et les polymères organiques, et de préférence parmi les latex de polybutadiène-styrène, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polyfluorure de vinylidène, et leurs mélanges.

Le procédé selon l'invention d'une cellule de batterie Li-ion, comprenant un matériau pour cathode à base de LNMO, un matériau pour anode, un séparateur et un électrolyte, est tel que ladite cellule comprend un matériau pour anode à base de graphite ou à base de LTO.

Le carbone graphite peut être choisi parmi les carbones graphite synthétiques, et naturels à partir de précurseurs naturels suivis d'une purification et/ou d'un post traitement. D'autres matériaux actifs à base de carbone peuvent être utilisés comme le carbone pyrolitique, le carbone amorphe, le charbon actif, le coke, le brai de houille et le graphène. Des mélanges de graphite avec l'un ou plusieurs de ces matériaux sont possibles.

Le matériau pour anode à base de LTO comprend par exemple un matériau actif de formule Li₄Ti₅O₁₂ (LTO).

Le matériau pour anode à base de graphite ou à base de LTO peut en outre comprendre un ou plusieurs liants comme pour la cathode.

Les liants décrits ci-dessus pour la cathode peuvent être utilisés pour l'anode.

Un séparateur est placé entre les électrodes de la cellule de batterie Li-ion. Il joue le rôle d'isolant électrique. Plusieurs matériaux peuvent être utilisés comme séparateurs. Les séparateurs sont généralement composés de polymères poreux, de préférence de polyéthylène et/ou de polypropylène.

Le procédé selon l'invention d'une cellule de batterie Li-ion, comprenant un matériau pour cathode à base de LNMO, un matériau pour anode, un séparateur et un électrolyte, est tel que ladite batterie comprend un électrolyte, de préférence liquide.

Le sel de lithium le plus commun est un sel inorganique, à savoir l'hexafluorophosphate de lithium (LiPF₆). D'autres sels inorganiques sont appropriés et peuvent être choisis parmi LiClO₄, LiAsF₆, LiBF₄ ou LiI. Des sels organiques sont également appropriés et peuvent être choisis parmi le bis[(trifluorométhyl)sulfonyl]imide de lithium (LiN(CF₃SO₂)₂), le trifluorométhane sulfonate de lithium (LiCF₃SO₃), le bis(oxalato)borate de lithium (LiBOB), le fluoro(oxolato)borate de lithium (LiFOB), le difluoro(oxolato)borate de lithium (LiDFOB), le bis(perfluoroéthylsulfonyl)imide de lithium (LiN(CF₃CF₂SO₂)₂), LiCH₃SO₃, LiR_{F}SOSR_{F}, LiN(R_{F}SO₂)₂, LiC(R_{F}SO₂)₃, R_{F} étant un groupement choisi parmi un atome de fluor et un groupement perfluoroalkyle comportant entre un et huit atomes de carbone.

Le ou les sel(s) de lithium sont, de préférence, dissous dans un ou plusieurs solvants choisis parmi les solvants polaires aprotiques, par exemple, le carbonate d'éthylène (noté « EC »), le carbonate de propylène, le carbonate de diméthyle (noté « DMC ») et le carbonate d'éthyle et de méthyle (noté « EMC »).

### Exemple

### 1. Procédé de formation de cellule de batterie Li-ion

La cellule est tout d'abord activée par injection (100) d'un électrolyte. Une période d'imprégnation (200) à température ambiante (23°C) au sein de la cellule s'en suit pendant 48 heures. Après avoir été chargée (300) jusqu'à un état de charge de 100%, la cellule est stockée (400) en circuit ouvert à température ambiante pendant 4 semaines.

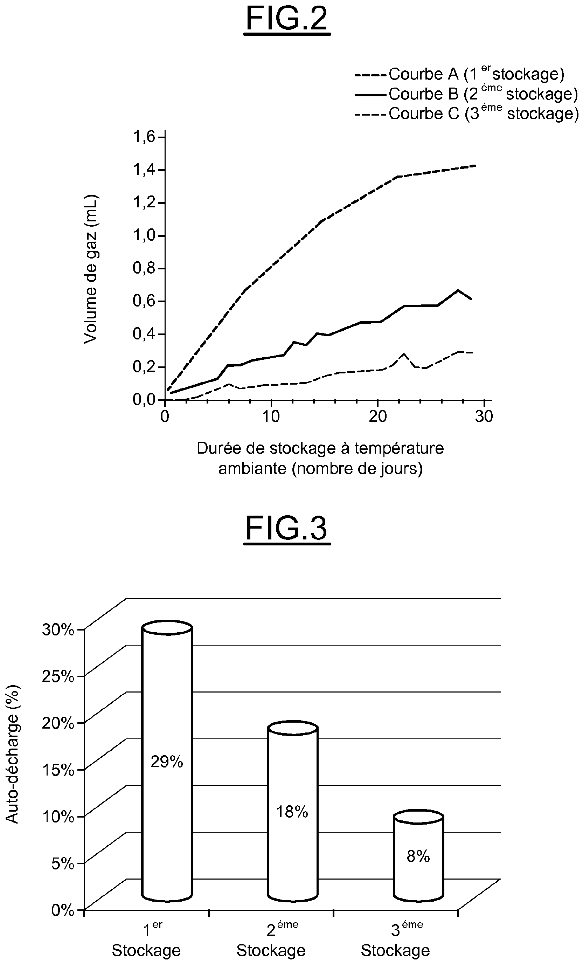

Une décharge (500) complète de la cellule est alors réalisée suivie d'un stockage (600) en circuit ouvert à température ambiante pendant 12 heures. Le volume de gaz généré est mesuré (700) à l'issue de cette première période de 4 semaines de stockage, appelée premier stockage. Comme il est trop important (1,4 mL d'après la courbe A sur la figure 2), il est procédé à une évacuation (800) du gaz. La cellule est chargée (300) une nouvelle fois jusqu'à un état de charge de 100% avant d'être stockée (400) à nouveau en circuit ouvert à température ambiante pendant 4 semaines. Il s'agit de la deuxième période de 4 semaines de stockage, appelée deuxième stockage.

La cellule est déchargée (500) complètement puis stockée (600) en circuit ouvert à température ambiante pendant 12 heures. Le volume de gaz généré est à nouveau mesuré (700). La cellule dégaze encore mais de manière moins importante que lors du premier stockage (0,6 mL d'après la courbe B sur la figure 2). Cette observation est signe d'une stabilisation progressive de l'interface cathode/électrolyte.

Comme le volume de gaz généré est encore trop important, il est procédé à nouveau à une évacuation (800) du gaz et le procédé de formation est relancé. A l'issue de la troisième période de stockage, appelée troisième stockage, suivie d'une décharge (500) complète et d'un stockage (600) en circuit ouvert à température ambiante pendant 12 heures, le volume de gaz généré est mesuré (700) (0,2 mL d'après la courbe C sur la figure 2). Comme il est jugé suffisamment faible, il est procédé à une évacuation (900) finale du gaz suivie d'une charge (1000) de la cellule jusqu'à un état de charge de 100%. La cellule est alors formée et prête à l'emploi pour utilisation.

### 2. Evaluation et résultat des cellules

### 2.1 Résultat concernant le dégazage

La figure 2 montre, comme évoqué ci-dessus, que la cellule de batterie Li-ion dégaze de manière de moins en moins importante avec le nombre d'itérations du procédé de formation selon l'invention. Ainsi, après un premier stockage (400) à un état de charge de 100% pendant 4 semaines à température ambiante, la courbe A indique que la cellule génère 1,4 mL de gaz.

Comme ce volume de gaz est trop important, le procédé de formation selon l'invention est relancé.

Après le deuxième stockage de 4 semaines, la courbe B indique que la cellule génère 0,6 mL de gaz. Comme ce volume de gaz est à nouveau jugé trop important, les différentes étapes du procédé de formation selon l'invention sont répétées.

Après le troisième stockage de 4 semaines, la courbe C indique que la cellule génère seulement 0,2 mL.

La cellule est dès lors formée et prête à l'emploi.

### 2.2 Résultat concernant l'auto-décharge

La figure 3 montre que l'autodécharge est de plus en plus faible avec le nombre d'itérations du procédé de formation selon l'invention. Ainsi, après un premier stockage (400), l'autodécharge de la cellule de batterie Li-ion est évaluée à 29%.

Le procédé de formation selon l'invention est répété et la cellule est à nouveau stockée pendant 4 semaines à température ambiante. Après ce deuxième stockage, l'autodécharge est évaluée à 18%.

Le procédé de formation selon l'invention est à nouveau répété et après le troisième stockage, l'autodécharge est évaluée à seulement 8%.

L'ensemble des résultats que les figures 2 et 3 divulguent suggère que l'interface cathode/électrolyte est de plus en plus stable.

L'objectif initial de développer un procédé de formation spécifique d'une cellule de batterie Li-ion comprenant un matériau pour cathode à base de LNMO permettant de réduire de manière importante le dégazage et l'autodécharge est donc atteint.

## Revendications

1. Procédé de formation d'une cellule de batterie Li-ion comprenant un matériau pour cathode à base de LNMO, comprenant un matériau actif de formule LiNiₓMn₂₋ₓO₄, dans laquelle 0<x≤0.5, un matériau pour anode, un séparateur et un électrolyte, **caractérisé en ce qu'**il comprend les étapes successives suivantes :
(a) charge (300) de la cellule jusqu'à un état de charge de 100% ;
(b) stockage (400) de la cellule à un état de charge de 100% en circuit ouvert pendant une durée d'au moins 48 heures ;
(c) évacuation (800, 900) du gaz généré pendant la charge et le stockage.

2. Procédé selon la revendication 1, dans lequel le stockage (400) se déroule à température ambiante.

3. Procédé selon l'une des revendications 1 ou 2, comprenant en outre, entre l'étape (b) et l'étape (c), une étape de décharge (500) de la cellule jusqu'à un état de charge compris entre 10 et 0% suivie d'une étape de stockage (600) de la cellule à un état de charge compris entre 10 et 0% en circuit ouvert à température ambiante.

4. Procédé selon l'une des revendications précédentes, dans lequel les étapes successives sont répétées au moins une seconde fois.

5. Procédé selon l'une des revendications précédentes, dans lequel la durée de stockage (400) est au moins égale à une semaine, préférentiellement au moins égale à deux semaines, plus préférentiellement au moins égale à quatre semaines.

6. Procédé selon l'une des revendications précédentes, dans lequel on mesure (700) le volume de gaz généré pendant le stockage (400).

7. Procédé selon l'une des revendications précédentes, dans lequel les étapes successives sont répétées jusqu'à ce que le volume de gaz généré soit inférieur à un seuil.

8. Procédé selon l'une des revendications précédentes, dans lequel, lorsque le volume de gaz généré est inférieur à un seuil, une étape d'évacuation (900) du gaz est réalisée suivie d'une étape de charge (1000) de la cellule jusqu'à un état de charge de 100% avant utilisation.

9. Procédé selon l'une des revendications précédentes, dans lequel une étape préliminaire d'activation de la cellule par injection (100) d'un électrolyte est réalisée suivie d'une étape d'imprégnation (200) dudit électrolyte en circuit ouvert pendant 48 heures à température ambiante.

10. Procédé selon la revendication 1, dans lequel l'étape de stockage (400) est réalisée à une température comprise entre 15 et 45°C pendant une durée inférieure ou égale à deux semaines.

## Patentansprüche

1. Verfahren zur Herstellung einer Li-Ionen-Batteriezelle mit einem LNMO-Kathodenmaterial, das ein aktives Material mit der Formel LiNiₓMn₂₋ₓO₄ umfasst, wobei 0<x≤0,5, einem Anodenmaterial, einem Separator und einem Elektrolyten, **dadurch gekennzeichnet, dass** es folgende aufeinanderfolgende Schritte umfasst:
(a) Laden (300) der Zelle bis zu einem Ladezustand von 100%;
(b) Aufbewahren (400) der Zelle bei einem Ladezustand von 100% im abgeklemmten Zustand während einer Dauer von mindestens 48 Stunden;
(c) Ableiten (800, 900) des während des Ladens und Aufbewahrens erzeugten Gases.

2. Verfahren nach Anspruch 1, wobei das Aufbewahren (400) bei Umgebungstemperatur erfolgt.

3. Verfahren nach Anspruch 1 oder 2, das ferner, zwischen Schritt (b) und Schritt (c), einen Schritt zum Entladen (500) der Zelle bis auf einen Ladezustand zwischen 10 und 0% umfasst, gefolgt von einem Schritt zum Aufbewahren (600) der Zelle in einem Ladezustand zwischen 10 und 0% im abgeklemmten Zustand bei Umgebungstemperatur.

4. Verfahren nach einem der vorhergehenden Ansprüche, wobei die aufeinanderfolgenden Schritte mindestens ein zweites Mal wiederholt werden.

5. Verfahren nach einem der vorhergehenden Ansprüche, wobei die Dauer der Aufbewahrung (400) mindestens einer Woche entspricht, vorzugsweise mindestens zwei Wochen entspricht, bevorzugter mindestens vier Wochen entspricht.

6. Verfahren nach einem der vorhergehenden Ansprüche, wobei das während der Aufbewahrung (400) erzeugte Gasvolumen gemessen (700) wird.

7. Verfahren nach einem der vorhergehenden Ansprüche, wobei die aufeinanderfolgenden Schritte wiederholt werden, bis das erzeugte Gasvolumen unter einem Schwellenwert liegt.

8. Verfahren nach einem der vorhergehenden Ansprüche, wobei, wenn das erzeugte Gasvolumen unter einem Schwellenwert liegt, ein Schritt zum Ableiten (900) des Gases durchgeführt wird, gefolgt von einem Schritt zum Laden (1000) der Zelle bis auf einen Ladezustand von 100% vor Gebrauch.

9. Verfahren nach einem der vorhergehenden Ansprüche, wobei ein Vorbereitungsschritt zur Aktivierung der Zelle durch Einspritzen (100) eines Elektrolyten durchgeführt wird, gefolgt von einem Schritt zum Tränken (200) mit dem Elektrolyten im abgeklemmten Zustand während 48 Stunden bei Umgebungstemperatur.

10. Verfahren nach Anspruch 1, wobei der Schritt des Aufbewahrens (400) bei einer Temperatur zwischen 15 und 45°C während einer Dauer von kürzer gleich zwei Wochen durchgeführt wird.

## Claims

1. Process for forming a Li-ion battery cell comprising an LNMO-based cathode material, comprising an active material of formula LiNiₓMn₂₋ₓO₄, in which 0<x≤0.5, an anode material, a separator and an electrolyte, **characterized in that** it comprises the following successive steps:
(a) charging (300) the cell until it reaches a state of charge of 100%;
(b) storing (400) the cell in a state of charge of 100% in an open circuit for a period of time of at least 48 hours;
(c) removing (800, 900) the gas generated during the charging and the storage.

2. Process according to Claim 1, wherein the storage (400) is carried out at room temperature.

3. Process according to either of Claims 1 and 2, also comprising, between step (b) and step (c), a step of discharging (500) the cell until it reaches a state of charge of between 10% and 0%, followed by a step of storing (600) the cell in a state of charge of between 10% and 0% in an open circuit at room temperature.

4. Process according to one of the preceding claims, wherein the successive steps are repeated at least a second time.

5. Process according to one of the preceding claims, wherein the storage (400) time is at least equal to one week, preferentially at least equal to two weeks, more preferentially at least equal to four weeks.

6. Process according to one of the preceding claims, in which the volume of gas generated during storage (400) is measured (700).

7. Process according to one of the preceding claims, wherein the successive steps are repeated until the volume of gas generated is below a threshold.

8. Process according to one of the preceding claims, wherein, when the volume of gas generated is below a threshold, a step of removing (900) the gas is carried out, followed by a step of charging (1000) the cell until it reaches a state of charge of 100%, before use.

9. Process according to one of the preceding claims, wherein a preliminary step of activating the cell by injecting (100) an electrolyte is carried out, followed by a step of impregnating (200) said electrolyte in an open circuit for 48 hours at room temperature.

10. Process according to Claim 1, wherein the storing step (400) is carried out at a temperature of between 15 and 45°C for a period of time of less than or equal to two weeks.
